# EUROPEAN PATENT APPLICATION

(11) **EP 3 617 970 A1**
(43) Date of publication of application: **04.03.2020**
(21) Application number: 18191124.9
(22) Date of filing: 28.08.2018
(51) Int. Cl.: G06Q 10/10

(54) **AUTOMATIC ANSWER GENERATION FOR CUSTOMER INQUIRIES**

(71) Applicant: Digital Apex ApS, 2450 Copenhagen SV (DK)
(72) Inventor: Dahlgaard, Søren, 2450 Copenhagen SV (DK); Knudsen, Mathias Bæk Tejs, 2100 Copenhagen Ø (DK); Stöckel, Morten Danmark, 2100 Copenhagen Ø (DK)
(74) Representative: Patentgruppen A/S

(57) **Abstract**

The invention relates to computer implemented method for determining an answer based on content of a textual representation of an inquiry. The method comprises extracting at least a part of the textual representation, mapping the extracted part of the textual representation into one or more real valued vectors using a predetermined similarity embedding, combining the one or more real valued vectors into a similarity vector, comparing the similarity vector with predetermined similarity vectors, based on the comparison, selecting at least one of the predetermined similarity vectors, and determining the answer based on known answers associated with the at least one selected similarity vector.

## Description

### FIELD OF THE INVENTION

The invention relates to methods for computing or data processing methods, particularly methods for automatic processing of textual data.

### BACKGROUND OF THE INVENTION

Today's support and service management systems almost exclusively focus on underpinning the workflow of agents such as assigning support tickets to agents and performing simple keyword searches in historic tickets or other databases.

The use of artificial intelligence in these systems is very limited and at a very infant state, and automation as well as analytics is primarily driven by hand-crafted if-then-else rules. Furthermore, customer relations today are handled through many different channels, e.g. live chat, phone calls, social media and e-mails. As a result, available data is being poorly utilized leading to several problems, which not only increase the cost of customer service, but also impacts the customer experience.

Accordingly, there is a need for improving automated service management systems such as inquiry systems to provide a higher quality of the result returned by the systems.

### SUMMARY OF THE INVENTION

It is an object of the invention to address the above mentioned problems with automated service management systems. Particularly, it is an object to address solutions which are also capable of handling automated responses to inquiries originating from any of plurality of different communication channels.

In a first aspect of the invention there is provided a method for automatically determining an answer based on content of a textual representation of an inquiry, the method comprises
- receiving the textual representation,
- extracting at least a part of the textual representation,
- mapping the extracted part of the textual representation into one or more real valued vectors using a predetermined similarity embedding,
- combining the one or more real valued vectors into a similarity vector,
- comparing the similarity vector with predetermined similarity vectors,
- based on the comparison, selecting at least one of the predetermined similarity vectors, and
- determining the answer based on known answers associated with the at least one selected similarity vector.

Advantageously, the sought answer can be determined by the method, which may be implemented on a computer or a system of computers, by determining one or more similarity vectors representing the inquiry in a numerical format and by comparing the one or more similarity vectors with corresponding similarity vectors determined for historical inquiries and having associated answers or with similarity vectors determined for historical answers which relate to the received inquiry. The sought answer can be determined on basis of the direct or associated answers which are linked with the selected predetermined similarity vectors.

According to an embodiment, the extracting of at least a part of the textual representation comprises extracting a plurality of different parts of the textual representation. Advantageously, different parts such as summary, keyword, title and abstract parts may be extracted and used, possibly separately, for determining similarity vectors. Similarity vectors determined from different parts may improve determination of the suitable answers. For example, use of a summary may provide a better answer than use of the entire text of the inquiry.

According to an embodiment, the method further comprises generating one or more alternative textual representations of the received textual representation, and generating additional real valued vectors based on the one or more alternative textual representations. Alternative textual representations such as computer generated summaries or versions where words have been replaced with synonyms may improve determination of the most relevant answers.

According to an embodiment, the method comprises determining a communication format A, B, C, out of a plurality of possible communication formats, in which the inquiry is provided. Advantageously, knowledge of the format, such as e-mail or chat-message formats, may be used for determining the format of the answer, e.g. so that inquiry and answer have the same communication format.

According to an embodiment, one or more additional real valued vectors are determined based on the determined communication format. Advantageously, the communication format may include further information which can improve the relevance of the determined answer. For example, determination of a e-mail format of the inquiry may result in determination of answers in a corresponding long-text format.

According to an embodiment, the inquiry is provided in a specific communication format and where the determined answer is determined in a different communication format. Advantageously, the answer may be in a different format or converted via computer generated conversion into a format which is different from the inquiry-format.

According to an embodiment, determining the answer comprises combining the known answers associated with a plurality of selected similarity vectors. Advantageously, the answer may be generated from different text-parts of different historical answers.

According to an embodiment, the similarity embedding (102a) is determined using textual training data and a mapping model, where the similarity embedding comprises one or more of the predetermined similarity vectors resulting from a combination of real valued vectors determined from the textual training data.

The similarity embedding provides a mapping from the input of the extracted part of the textual representation to the one or more similarity vectors via the real values vectors as an intermediate mapping step.

The similarity embedding may comprise an optimization step where the mapping model is optimized to predict output data obtained from the textual training data based on different input data obtained from the textual training data, where the output data has a relationship with the input data.

According to an embodiment, the textual training data are provided in a plurality of different communication formats. Advantageously, use of training data in different formats may improve the determination of relevant answers when the inquiry can be in one of several communication formats.

According to an embodiment, the similarity embedding is determined using a plurality of different versions of the textual training data, where the different versions are obtained by replacing content of the textual training data with alternative and or supplementing content.

According to an embodiment, the textual training data comprises an inquiry and an answer to the inquiry, where determining the similarity embedding comprises determining a similarity embedding of the answer and another similarity embedding of the inquiry subject to a constraint of the distance between a similarity vector of the solution and another similarity vector of the question. Advantageously, by ensuring that similarity vectors of historical answers and associated inquiries are located close, the method may identify corresponding knowledge articles and historic answers with greater accuracy given a new inquiry. Thus, answers can be found in knowledge articles based on the associated inquiry text. Without the association with the inquiry, the knowledge article would most likely not match the similarity vector of an incoming inquiry....

According to an embodiment, the textual answer is determined using a trained classifier.

A second aspect of the invention relates to a computer program product directly loadable into a memory accessible by a computing system, the computer program product comprises instructions for performing the steps of the method according to claim 1 when the computer program product is run on the computer system.

The computer program product may be provided on a computer readable storage medium, a non-transitory medium or being downloadable from a communication network. The computer program product comprise instructions to cause the data processing system, e.g. in the form of a controller, to carry out the instruction when loaded onto the data processing system.

A third aspect of the invention relates to a system for determining an automated answer based on content of a textual representation of an inquiry, the system comprises a memory and a processor, where the memory stores instructions for the processor, which instructions enables the processor to perform the method of the first aspect.

In general, the various aspects and embodiments of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

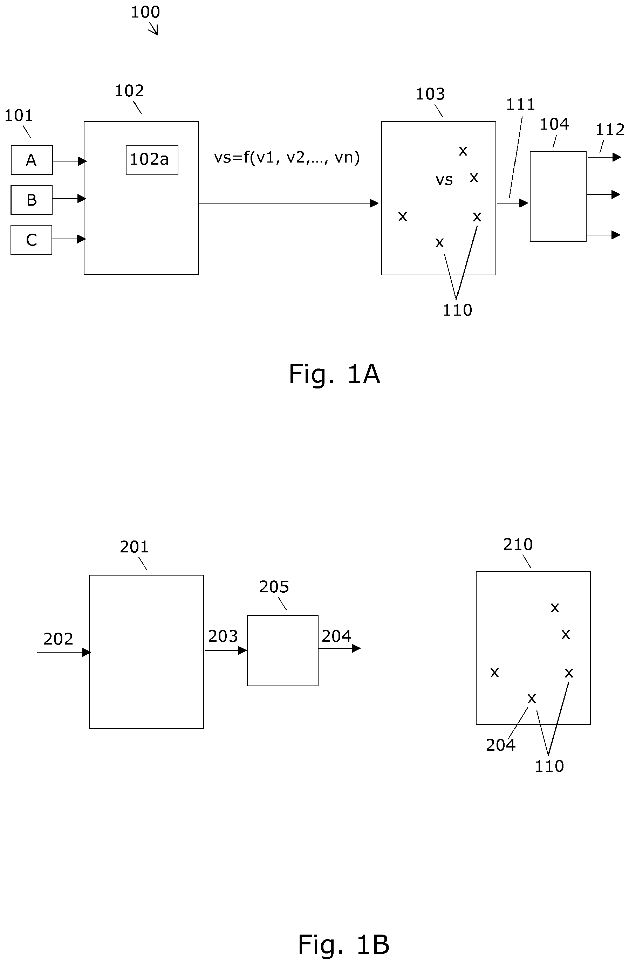

Embodiments of the invention will be described, by way of example only, with reference to the drawings, in which
Fig. 1A shows a system configured to determine a computer generated response as a function of content of an inquiry, and
Fig. 1B illustrates a method for determining a similarity embedding to be used for determining the computer generated automatic responses.

### DETAILED DESCRIPTION OF AN EMBODIMENT

Fig. 1A shows a system 100 configured to determine a computer generated answer/response 111, 112 as a function of content of a textual representation of an inquiry 101.

The inquiry may be a question from a user of an internet-based service, an automatically generated question based on identified user actions on an internet-based service.

The inquiry 101 is supplied to the system 100 is in the form of a text. However, the textually represented inquiry 101 may be obtained from an original inquiry which may be in the form of a text, a voice recording, a video recording, an image or other format including combinations thereof.

The answer to the inquiry may in the form of a textual answer to the question, a category or sub-category of the inquiry or answer, importance/priority, expected impact, a related knowledge article, an ID of a knowledge article. The determined answer may be in the form of a part of an answer which need to be completed, e.g. via combination with other determined answers or by revision of the answer by support staff.

For example, the textual answer may be generated on basis of a plurality of similarity vectors determined from the text of the inquiry 101, e.g. from different parts or versions of the text. Thus, the answers associated with the similarity vectors are combined into the final answer 111, 112.

The inquiry 101 may be provided in different communication formats A, B, C dependent on what communication format is used by the user for the inquiry. Possible communication formats include e-mails, web formulas, social media messages, live chat messages, transcribed voice or video messages and others.

The system 100 may be configured to determine the communication format A, B, C in which the inquiry is provided. This determination may be performed as an initial processing of the inquiry 101.

The determined answer 111, 112 may be generated in a communication format A, B, C which is different from the communication format of the inquiry. The conversion of the communication format of an initial answer 111 to a final answer 112 may be performed by the format processing unit 104 e.g. by making a short version of the initial answer by extracting the most relevant parts or by augmenting the initial answer 111 with additional information such as background information. Accordingly, the inquiry 101 may be in a given communication format, but the determined answer 111, 112 may be provided in a different communication format.

The system 100 may be configured to handle inquiries in only a single format, or the system 100 may be configured handle inquires in a plurality of formats.

The textual representation of the inquiry 101, e.g. in one of a plurality of allowed communication formats, or at least an extracted part thereof, is received by the pre-processor 102 which implements a predetermined similarity embedding 102a.

The inquiry 101, or extracted part thereof, is mapped by the predetermined similarity embedding 102a into one or more real valued vectors. The similarity embedding 102a is trained so that semantically similar inquiries or parts thereof are mapped to vectors having relative small distances to each other.

As an example, the similarity embedding 102a may be embodied by the internal weights of a single-layer neural network classifier trained to take three consecutive words (or other number) as input and predict the following word over a large corpus of training text.

The inquiry 101 or one or more extracted parts thereof, may be divided into text parts of a few words such as two to ten consecutive words. These text parts are provided as input data to the similarity embedding 102a which determines an output in the form of a real valued vector as a function of the input data.

Thus, the use of the similarity embedding 102a on the inquiry 101 returns a real valued vector for every word, tuple-of-words, paragraph or other part of the inquiry 101.

The input data may be obtained from a text part of the inquiry 101, e.g. as a numerical or other representation of the text part. Alternatively, the input data and the text part may be identical.

For example, a text part in the form of consecutive words a,b,c can represented as an n-dimensional vector with zeros everywhere except the a'th, b'th, and c'th entry which could be set to ones. As another example, consecutive words a,b,c can be represented by the single integer a + b * n + c * n^2.

In order to generate a numerical representation of the entire inquiry 101, the real valued vectors v1, v2, ... vn determined as a function of the text parts of the inquiry are combined into a similarity vector vs as indicated in Fig. 1A by the real valued vectors function vs=f(v1, v2,..., vn). The combination of the real valued vectors may be a linear combination, e.g. where the vectors are weighted by the inverse frequency of words/tuples/named entities. That is, the function f may be a function trained using a large corpus of text. Then the inverse frequency of a word "a" is the number of a's in that text divided by the total number of words in that text. As an example, the inverse frequency of "the" in the text "the cat and the dog ate the pie" would be 3/8.

In order to find an answer 111, 112 to the inquiry, the similarity vector vs is compared with predetermined similarity vectors 110 in order to select one or more of the predetermined similarity vectors. For example, the predetermined similarity vectors may be selected on basis on a criterion of a distance between similarity vector vs and the predetermined similarity vectors 110. Accordingly, predetermined similarity vectors 110 having a distance from the determined similarity vector vs below a predetermined distance may be selected.

The distance between the vectors corresponding to a similarity measure of the vectors can be determined by determining the cosine similarity of vectors, Jaccard similarity of set-representation of vectors, Euclidian distance, RBF kernel, word mover's distance, or other method including combinations of these.

The selection of the closest predetermined similarity vectors 110 may be performed using a trained classifier 103 which may be based on standard machine learning techniques.

For example, standard machine learning techniques may be used to determine the answer for a similarity vector v given the answers to predetermined similarity vectors u1, .., un. It may be essential that the answer to v is not necessarily determined from the closest of u1,...,un. For instance, a binary answer to v may needed (e.g. is the inquiry for v an "incident" or a "request"), then it may be that the closest of u1,...,un to v actually has the wrong label but the next 10 closest has the correct one. Such machine learning methods may in some way or other be based on the distance between the vectors.

The answer 111, 112 is determined based on known answers, such as textual answers, associated with the one or more predetermined similarity vectors 110 selected in the previous step.

Thus, once an incoming customer inquiry has been mapped to one-or-more similarity vectors, these are used with historical inquiries, knowledge articles, etc. from any combination of data sources to generate the sought answer, e.g. category or sub-category of the inquiry, importance/priority, expected impact, related knowledge article, textual answer to the question. This is done by comparing each of the similarity vectors for the inquiry with the predetermined similarity vectors of previously received customer inquiries, knowledge articles, etc. Based on the distance of the historic similarity vectors to the similarity vectors of the inquiry, at least part of the associated historic answers are combined to generate the new answer (111, 112) possibly using standard machine learning techniques such as classification.

In addition to determine real valued vectors v1, v2, ... vn as a function of the text of the inquiry 101, additional information associated with the inquiry can be used for determining one or more supplementing real valued vectors. Such additional information comprises the communication format A, B, C in which the inquiry is provided, the time of receipt of the inquiry, user identity details such as age and gender, and other information.

The similarity vectors may be determined from different parts of the inquiry, or from different versions of the inquiry.

For example, the similarity vectors may be determined from the entire text, from individual paragraphs of the text, a keyword section of the text, a summary of the text.

The different versions of the inquiry can be determined as alternative textual representations of the inquiry 101, e.g. by use of automatic summary generating tools for generation of a summary as an alternative short version, by determining named entities from the inquiry by use of named-entity recognition tools, by generating a key word section.

The determination of alternative versions of the inquiry or from different parts of the inquiry addresses the problem that different data sources contain significantly different ways of describing the same inquiry. For example, e-mails are typically longer and more formally written that chat messages. Thus, if the inquiry is formulated as a long e-mail, but the best matching answer originates from a chat message, a summary-version of the e-mail may generate a similarity vector vs which is closer to the similarity vector of the known inquiry-answer data point.

Fig. 1B illustrates a method for determining the similarity embedding 102a using textual training data 202 and a mapping model 201. The mapping model 201 is trained to predict output data based on input data obtained from the textual training data 202. Both the output data and the input data may be obtained from the textual training data 202. For example, as mentioned above, the mapping model 201 may be trained on basis of one or more consecutive words (which form the input data) and the following word (which forms the output data) over a large corpus of text from the training data 202.

The training data 202 may be obtained from any data source, e.g. a customer's database containing historic inquiries and answers. The training data may also include new inquiries and answers to the inquiries, e.g. answers which have been supplemented with explanations provided by support staff or generated by a computer program. In this way, the similarity embedding 102a can be continuously updated and improved.

The training of the mapping model 201 may be performed by use of an optimization process where the mapping model 201 is optimized to predict the output data.

The training or optimization of the training model results in real valued vectors 203, corresponding to the real valued vectors v1, v2 in Fig. 1A.

By use of the training data 202 of the trained or optimized mapping model 201, a plurality of real valued vectors 203 are determined during the training process. On basis of a selection of the plurality of real valued vectors 203, one or more similarity vectors 204 are determined as a combination of the real valued vectors 203, e.g. a combination where the vectors are weighted as explained above. The method for combining vectors are embodied by the combiner 205

For example, a plurality of real valued vectors 203 may be determined from training data 202 which are extracted from a historic inquiry. The historic inquiry has an associate answer to the inquiry. The real valued vectors 203 which are obtained from the historic inquiry are combined into one or more similarity vectors 204.

When the mapping model 201 has been trained to a sufficient level, the mapping model, e.g. the internal weights of a neural network, constitutes the similarity mapping.

The similarity vectors 204 obtained during the training process - or subsequent to the training process using the obtained similarity embedding 102a - from training data comprising inquiry-answer associations, can be stored in a searchable data storage 210, such as a database, a search structure, an in-memory table, e.g. by use of Locality-Sensitive Hashing. In this way, the predetermined similarity vectors 110 can be obtained from similarity vectors 204 obtained from historic training data.

In order to generate similarity vector 204 which are comparable with inquiries 101 obtained from different communication formats A, B, C, the textual training data 202 can be provided in a plurality of different communication formats. The different communication formats may be generated as described above, e.g. by making a short-text version, or by augmenting a short-text with additional text.

The training data 202 could also be augmented with generated data in order to generate alternative formulations of historic inquiries, e.g. by replacing words with synonyms using an automatic process.

In cases where the textual training data 202 comprises a description of a solution to a question and a description of the question, the real valued vectors 203 may additionally be determined on basis of the text of the question. The real valued vectors 203 of the question are combined into one or more similarity vectors 204. In order to ensure that the similarity vector 204 of the question is relative close to the similarity vector 204 of the solution to the question, the similarity embedding is performed under the constraint that that distance between the similarity vectors of the solution and question are relatively small, e.g. be setting a constraint of a maximal distance. It is understood, that the question of the historic training data is equivalent to an inquiry and that the solution of the training data is equivalent to an answer.

In this way a knowledge paper which provides an answer will be linked with the historic inquiry corresponding to the answer.

The textual answer 111, 112 is determined using a trained classifier. The trained classifier may be trained using similarity vectors of known textual representations of known inquires and associated known textual answers.
Thus, historical inquiries and associated answers can be used to train a machine learning classifier such as a Support Vector Machine, Random Forest Classifier, or Neural Network Classifier using their corresponding similarity vectors as input and associated category or answer as target value.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. Furthermore, individual features mentioned in different claims, may possibly be advantageously combined, and the mentioning of these features in different claims does not exclude that a combination of features is not possible and advantageous.

The use of reference signs in the claims with respect to elements indicated in the figures shall also not be construed as limiting the scope of the invention.

## Claims

1. A method for automatically determining an answer based on content of a textual representation of an inquiry (101), the method comprises
- receiving the textual representation,
- extracting at least a part of the textual representation,
- mapping the extracted part of the textual representation into one or more real valued vectors (v1, v2, vn) using a predetermined similarity embedding (102a),
- combining the one or more real valued vectors into a similarity vector (vs),
- comparing the similarity vector (vs) with predetermined similarity vectors (110),
- based on the comparison, selecting at least one of the predetermined similarity vectors, and
- determining the answer (111, 112) based on known answers associated with the at least one selected similarity vector.

2. A method according to claim 1, where extracting at least a part of the textual representation comprises extracting a plurality of different parts of the textual representation.

3. A method according to any of the preceding claims, comprising generating one or more alternative textual representations of the received textual representation, and generating additional real valued vectors (v1, v2, vn) based the one or more alternative textual representations.

4. A method according to any of the preceding claims, comprising determining a communication format (A, B, C), out of a plurality of possible communication formats, in which the inquiry (101) is provided.

5. A method according to claim 4, further comprising determining one or more additional real valued vectors (v1, v2, vn) based on the determined communication format.

6. A method according to any of the preceding claims, where the inquiry (101) is provided in a specific communication format (A, B, C) and where the determined answer (111, 112) is determined in a different communication format.

7. A method according to any of the preceding claims, where determining the answer (111, 112) comprises combining the known answers associated with a plurality of selected similarity vectors.

8. A method according to any of the preceding claims, comprising determining the similarity embedding (102a) using textual training data (202) and a mapping model (201), where the similarity embedding comprises one or more of the predetermined similarity vectors (110) resulting from a combination of real valued vectors determined from the textual training data.

9. A method according to claim 8, where determining the similarity embedding (102a) comprises an optimization step where the mapping model is optimized to predict output data obtained from the textual training data based on different input data obtained from the textual training data, where the output data has a relationship with the input data.

10. A method according to claim 8-9, where the textual training data (202) are provided in a plurality of different communication formats (A, B, C).

11. A method according to any of claims 8-10, comprising determining the similarity embedding (102a) using a plurality of different versions of the textual training data (202), where the different versions are obtained by replacing content of the textual training data with alternative and or supplementing content.

12. A method according to any of claims 8-11, where the textual training data (202) comprises an inquiry and an answer to the inquiry, and where determining the similarity embedding (102a) comprises determining a similarity embedding of the answer and another similarity embedding of the inquiry subject to a constraint of the distance between a similarity vector (204) of the solution and another similarity vector (204) of the question.

13. A method according to any of the preceding claims, where the textual answer (111, 112) is determined using a trained classifier.

14. A computer program product directly loadable into a memory accessible by a computing system, the computer program product comprises instructions for performing the steps of the method according to claim 1 when the computer program product is run on the computer system.

15. A system for determining an automated answer based on content of a textual representation of an inquiry, the system comprises a memory and a processor, where the memory stores instructions for the processor, which instructions enables the processor to perform the method of claim 1.
